# EUROPÄISCHE PATENTSCHRIFT

(11) **EP 2 499 001 B1**
(45) Veröffentlichungstag und Bekanntmachung des Hinweises auf die Patenterteilung: **29.01.2014**
(21) Anmeldenummer: 10779472.9
(22) Anmeldetag: 09.11.2010
(51) Int. Cl.: B42D 15/10, G02B 5/23, G02B 5/20, G02F 1/00

(54) **KARTENFÖRMIGER DATENTRÄGER**
CARD SHAPED DATA CARRIER
SUPPORT DE DONNEES SOUS FORME DE CARTE

(30) Priorität: 11.11.2009 DE 102009052749
(43) Veröffentlichungstag der Anmeldung: 19.09.2012
(73) Patentinhaber: Giesecke & Devrient GmbH, 81677 München (DE)
(72) Erfinder: ENDRES, Günter, 81547 München (DE); SALZER, Tobias, 82008 Unterhaching (DE)
(86) Internationale Anmeldenummer: PCT/EP2010/006820
(87) Internationale Veröffentlichungsnummer: WO 2011/057760

(56) Entgegenhaltungen:
- WO-A1-01/62509
- WO-A1-2005/053968
- DE-A1- 19 941 295
- DE-A1-102005 057 474

## Beschreibung

Die Erfindung betrifft mehrschichtige kartenförmige Datenträger, insbesondere kartenförmige Datenträger, die mit einem Laserschreiber individualisiert werden. Die Erfindung betrifft auch ein Verfahren zum Einbringen einer verborgenen Kennzeichnung in einen derartigen Datenträger.

Ausweiskarten, wie etwa Kreditkarten oder Personalausweise werden seit langem mittels Lasergravur personalisiert und dabei beispielsweise mit einem Passbild oder anderen personenbezogenen Daten versehen. Zur Personalisierung einer Ausweiskarte durch Lasergravur werden in der Regel die optischen Eigenschaften des Substratmaterials der Karte durch geeignete Führung eines Laserstrahls in Gestalt einer gewünschten Kennzeichnung irreversibel verändert, insbesondere geschwärzt.

Aus der Druckschrift DE 40 33 300 A1 ist bekannt, einen kartenförmigen Datenträger mit einem Laserschreiber mit einer individualisierenden Information zu versehen, die visuell nicht sichtbar ist, die jedoch mit einem Infrarot-Prüfgerät maschinell ausgelesen werden kann. Die individualisierende Information wird dazu durch eine im sichtbaren Spektralbereich schwarze, für Infrarotstrahlung jedoch durchlässige Tarnschicht hindurch in eine darunterliegende Schicht eingeschrieben. Das Auslesen der verborgenen Information erfordert dabei prinzipiell ein entsprechendes Lesegerät, da die schwarze Tarnschicht nur für Infrarotstrahlung durchlässig ist.

Das Dokument DE 199 41 295 A offenbart einen Datenträger mit den Merkmalen des Oberbegriffs des Anspruchs 1.

Ausgehend davon liegt der Erfindung die Aufgabe zugrunde, einen Datenträger der eingangs genannten Art anzugeben, der die Nachteile des Stands der Technik vermeidet und der insbesondere eine Prüfung einer verborgenen Laser-Kennzeichnung ohne die Verwendung eines zusätzlichen Lesegeräts ermöglicht.

Diese Aufgabe wird durch den mehrschichtigen kartenförmigen Datenträger mit den Merkmalen des Hauptanspruchs gelöst. Ein Verfahren zum Einbringen einer verborgenen Kennzeichnung in einen kartenförmigen Datenträger ist in dem nebengeordneten Anspruch angegeben. Weiterbildungen der Erfindung sind Gegenstand der abhängigen Ansprüche.

Gemäß der Erfindung umfasst ein gattungsgemäßer kartenförmiger Datenträger eine Kennzeichnungsschicht, die eine verborgene Kennzeichnung enthält, sowie eine zumindest im Bereich der verborgenen Kennzeichnung über der Kennzeichnungsschicht angeordnete thermochrome Deckschicht: Die thermochrome Deckschicht ist unterhalb ihrer Umschlagtemperatur undurchsichtig und verbirgt die Kennzeichnung, während sie oberhalb ihrer Umschlagtemperatur durchscheinend oder transparent ist und den Blick auf die Kennzeichnung freigibt. Erfindungsgemäß ist die thermochrome Deckschicht für Strahlung außerhalb des sichtbaren Spektralbereichs durchlässig und die Kennzeichnungsschicht absorbiert Strahlungsenergie außerhalb des sichtbaren Spektralbereichs, so dass die verborgene Kennzeichnung mittels Laserstrahlung einer Wellenlänge außerhalb des sichtbaren Spektralbereichs durch die thermochrome Deckschicht hindurch in die Kennzeichnungsschicht einbringbar ist.

Die Erfindung verbindet somit eine einfache interaktive Prüfbarkeit des Datenträgers durch Temperaturbeaufschlagung mit der Möglichkeit der nachträglichen Individualisierung durch Lasermarkierung einer inneren Schicht des Datenträgers.

In vorteilhaften Ausgestaltungen ist die thermochrome Deckschicht durch eine thermochrome Druckschicht oder durch ein thermochromes Folienelement gebildet. Vorzugsweise weist die thermochrome Deckschicht eine Umschlagtemperatur im Bereich von 25 °C bis 60 °C, besonders bevorzugt im Bereich von 30 °C bis 40 °C auf.

Über der thermochromen Deckschicht können zur weiteren Echtheitsabsicherung und/oder zur optischen Aufwertung weitere Schichten angeordnet sein, beispielsweise eine optisch variable Farbschicht, insbesondere auf Basis von Flüssigkristallpigmenten. Auch eine transparente Folie mit einer diffraktiven Beugungsstruktur, insbesondere einem Hologramm oder einer anderen hologrammähnlichen Beugungsstruktur kommt in Betracht. Die weitere Schicht muss dabei lediglich im Bereich der einzubringenden verborgenen Kennzeichnung für die Strahlung des verwendeten Laserschreibers durchlässig sein, eine Bedingung, die im infraroten Spektralbereich für viele optisch variable Pigmente und für transparente Hologrammfolien mit dielektrischen Beschichtungen erfüllt ist.

In einer vorteilhaften Ausgestaltung ist die thermochrome Deckschicht reliefartig ausgebildet. Das Relief kann beispielsweise unter Verwendung von Laminierblechen oder dergleichen erzeugt werden. Zur Stabilisierung der Oberfläche kann das Relief mit einem Lack versehen werden.

Nach einer weiteren Ausgestaltung wird das Relief drucktechnisch erzeugt. Hierzu werden durch einen oder mehrere Druckvorgänge partiell Farbschichten aufgetragen, die thermochrome Pigmente enthalten. Die bedruckten Stellen bilden Erhöhungen und erzeugen zusammen mit den unbedruckten Stellen das gewünschte Relief.

Gemäß einer weiteren Erfindungsvariante ist die thermochrome Deckschicht zumindest in Teilbereichen in Form von Mustern, Zeichen oder einer Codierung ausgebildet.

Die thermochrome Deckschicht enthält nach einer Weiterbildung der Erfindung zwei oder mehrer übereinander angeordnete thermochrome Teilschichten, so dass zumindest eine erste und eine zweite übereinander angeordnete thermochrome Teilschicht vorliegt. Durch unterschiedliche Eigenschaften bzw. Ausgestaltung der thermochromen Teilschichten sind dabei attraktive visuelle Gestaltungsvarianten oder zusätzliche Echtheits-Absicherungen des Datenträgers möglich.

In einer besonders vorteilhaften Erfindungsvariante ist die erste thermochrome Teilschicht flächig und die zweite thermochrome Teilschicht reliefartig ausgebildet. Durch diese Art der Ausgestaltung tritt das Relief besonders plastisch hervor.

Alternativ oder zusätzlich können die erste und zweite thermochrome Teilschicht unterhalb ihrer Umschlagtemperatur unterschiedliche Farben aufweisen und/oder können unterschiedliche Umschlagtemperaturen aufweisen. Zumindest eine der thermochromen Teilschichten kann auch in Form von Mustern, Zeichen oder einer Codierung ausgebildet sein.

Beispielsweise kann eine erste, vollflächige, thermochrome Teilschicht mit einer ersten Farbe und einer ersten, niedrigeren Umschlagtemperatur über einer zweiten, strukturierten, thermochromen Teilschicht mit einer zweiten Farbe und einer zweiten, höheren Umschlagtemperatur aufgebracht sein. Die zweite thermochrome Teilschicht ist dabei in Form eines Motivs, beispielsweise eines graphischen Musters oder einer Zeichenfolge strukturiert.

Unterhalb der ersten Umschlagtemperatur ist bei Betrachtung nur die vollflächige erste Teilschicht in der ersten Farbe zu erkennen, eventuell zusammen mit einer noch darüber angeordneten optisch variablen Schicht. Bei Temperaturen zwischen der ersten und zweiten Umschlagtemperatur ist die erste Teilschicht transparent, die zweite, strukturierte Teilschicht jedoch noch undurchsichtig, so dass nunmehr das Motiv der zweiten Teilschicht sichtbar ist. Je nach Anordnung und Form des Motivs kann dabei auch die darunterliegende verborgene Kennzeichnung ganz oder teilweise sichtbar sein. Oberhalb der zweiten Umschlagtemperatur sind beide Teilschichten transparent und der Betrachter sieht nun die zuvor verborgene Kennzeichnung vollständig. Auf diese Weise kann durch Temperaturbeaufschlagung eine Abfolge unterschiedlicher optischer Effekte erzeugt werden

Die erste und zweite thermochrome Teilschicht können beabstandet angeordnet, insbesondere durch ein Folienelement getrennt sein, oder sie können unmittelbar übereinander angeordnet sein.

Die Erfindung enthält auch ein Verfahren zum Einbringen einer verborgenen Kennzeichnung in einen kartenförmigen Datenträger, der eine Kennzeichnungsschicht aufweist, die Strahlungsenergie außerhalb des sichtbaren Spektralbereichs absorbiert, und über der in einem zu kennzeichnenden Bereich eine thermochrome Deckschicht angeordnet ist, die für Strahlung außerhalb des sichtbaren Spektralbereichs durchlässig ist. Bei dem Verfahren wird die verborgene Kennzeichnung erfindungsgemäß durch Einwirkung von Laserstrahlung einer Wellenlänge außerhalb des sichtbaren Spektralbereichs durch die thermochrome Deckschicht hindurch in die Kennzeichnungsschicht eingebracht.

In einer vorteilhaften Verfahrensvariante wird zum Einbringen der Kennzeichnung Laserstrahlung im infraroten Spektralbereich verwendet.

Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet.

Es zeigen:
- Fig. 1: einen Querschnitt durch einen erfindungsgemäßen kartenförmigen Datenträger im Bereich der verborgenen Kennzeichnung,
- Fig. 2: jeweils eine Aufsicht auf den Datenträger von Fig. 1, in (a) unterhalb und in (b) oberhalb der Umschlagtemperatur der thermochromen Deckschicht, und
- Fig. 3: einen Querschnitt durch einen kartenförmigen Datenträger nach einem weiteren Ausführungsbeispiel der Erfindung.

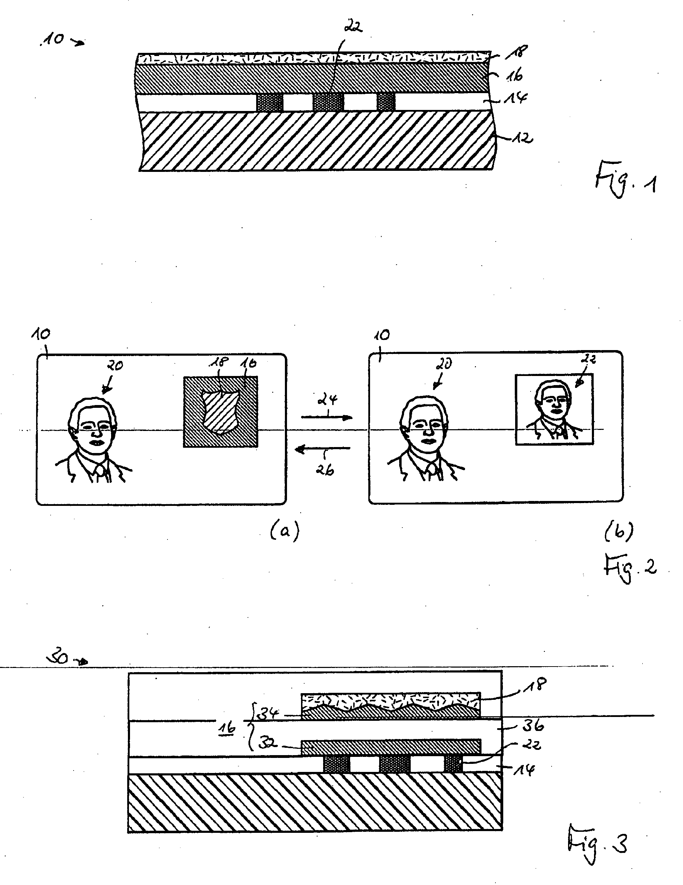

Die Erfindung wird nun am Beispiel einer Identifikationskarte erläutert. Figur 1 zeigt dazu einen Querschnitt durch eine Identifikationskarte 10, wie etwa eine Ausweiskarte, Bankkarte, Kreditkarte oder einen Führerschein. Von dem Kartenaufbau sind dabei nur die für die Erfindung wesentlichen Schichten gezeigt. Es versteht sich, dass die Identifikationskarte je nach der beabsichtigten Anwendung darüber hinaus typischerweise weitere, dem Fachmann an sich bekannte Schichten enthält. Figur 2 zeigt zwei Aufsichten auf die Identifikationskarte 10 der Fig. 1, einmal bei einer normalen Umgebungstemperatur von etwa 20 °C (Fig. 2(a)), und einmal bei einer zur Durchführung der Echtheitsprüfung erhöhten Temperatur von etwa 40 °C (Fig. 2(b)).

Mit Bezug auf Fig.1 umfasst die Identifikationskarte 10 einen Kartengrundkörper 12, der je nach Einsatzgebiet der Karte im Allgemeinen selbst aus mehreren laminierten Folien besteht, sowie eine Kennzeichnungsschicht 14 und eine thermochrome Deckschicht 16 mit einer Umschlagtemperatur von 35 °C. Unterhalb der Umschlagtemperatur, also auch bei normaler Umgebungstemperatur, ist die thermochrome Deckschicht undurchsichtig, beispielsweise schwarz, während sie oberhalb ihrer Umschlagtemperatur durchscheinend oder transparent ist und den Blick auf die darunterliegenden Schichten freigibt. Über der thermochromen Deckschicht 16 sind optional weitere Schichten, wie etwa eine strukturierte, optisch variable Flüssigkristallschicht 18 angeordnet.

In einem ersten Bereich enthält die Identifikationskarte 10 eine offene Kennzeichnung 20, beispielsweise ein Portrait des Karteninhabers, wie in Fig. 2(a) und (b) gezeigt. Diese offene Kennzeichnung 20 ist unabhängig von der Umgebungstemperatur stets sichtbar. Sie kann in den Kartengrundkörper, in die Kennzeichnungsschicht oder in eine andere, im Querschnitt der Fig. 1 nicht dargestellte Schicht eingebracht sein.

In einem zweiten Bereich der Identifikationskarte 10 enthält die Kennzeichnungsschicht 14 zusätzlich eine verborgene Kennzeichnung 22, beispielsweise eine gegenüber der Kennzeichnung 20 verkleinerte Portraitdarstellung des Karteninhabers, wie in Fig. 2(b) illustriert. Diese verborgene Kennzeichnung 22 wurde dabei nach der eigentlichen Herstellung der Karte beim Kartenhersteller durch Einwirkung von Infrarot-Laserstrahlung durch die thermochrome Deckschicht 16 hindurch in die Kennzeichnungsschicht 14 eingebracht, wie weiter unten genauer beschrieben.

Wie in Fig. 2(a) illustriert, ist die verborgene Kennzeichnung 22 bei normaler Umgebungstemperatur (T < 35 °C) nicht sichtbar, da in diesem Temperaturbereich die über der verborgenen Kennzeichnung 22 liegende thermochrome Deckschicht 16 undurchsichtig ist und die Kennzeichnung 22 verbirgt. Bei normaler Umgebungstemperatur erscheint der zweite Bereich der Identifikationskarte 10 daher bei Betrachtung mit dem optisch variablen Eindruck der strukturierten Flüssigkristallschicht 18, der vor dem schwarzen Hintergrund der thermochromen Deckschicht 16 effektvoll in Erscheinung tritt.

Wird die Temperatur der Identifikationskarte 10 über die Umschlagtemperatur von 35 °C erhöht (Pfeil 24), beispielsweise auf eine Temperatur von 40 °C, so wird die thermochrome Deckschicht 16 durchsichtig und gibt den Blick auf die zuvor verborgene Kennzeichnung 22 frei, wie in Fig. 2(b) dargestellt. Gleichzeitig tritt der optisch variable Effekt der Flüssigkristallschicht 18 aufgrund des nunmehr fehlenden dunklen Hintergrunds zurück. Bei Abkühlung (Pfeil 26) stellt sich in kurzer Zeit reversibel wieder der ursprüngliche visuelle Eindruck der Fig. 2(a) ein.

Die verborgene Kennzeichnung 22 erlaubt somit eine einfachsten Mitteln durchführbare Echtheitsprüfung der Identifikationskarte 10. Vorzugsweise sind die offene Kennzeichnung 20 und die verborgene Kennzeichnung 22 aufeinander bezogen, wie etwa die beiden Portraitdarstellungen der Fig. 2(b), so dass der Benutzer ohne weiteres die Echtheit der Karte 10 aufgrund der Überstimmung bzw. einer fehlenden Übereinstimmung der Kennzeichnungen 20, 22 bei Temperaturbeaufschlagung der Karte 10 beurteilen kann.

Neben der einfachen interaktiven Prüfbarkeit besteht ein weiterer besonderer Vorteil der erfindungsgemäßen Gestaltung darin, dass die verborgene Kennzeichnung 22 nach der eigentlichen Herstellung der Identifikationskarte 10 beim Kartenhersteller durch einen Laserstrahlschreiber ins Innere des Schichtaufbaus eingebracht und dadurch zur nachträglichen, dezentralen Individualisierung der Karte 10 genutzt werden kann.

Die thermochrome Deckschicht 16 kann insbesondere als Druckelement oder als Folienelement ausgebildet sein. Eine zusätzliche Absicherung kann durch die optionale weitere Schicht 18 vorgenommen werden, bei der es sich beispielsweise um eine strukturierte, optisch variable Flüssigkristallschicht 18 handeln kann (Figuren 1 und 2). Die weitere Schicht 18 muss dabei lediglich im Bereich der einzubringenden Kennzeichnung für die Strahlung des verwendeten Laserschreibers durchlässig sein.

Die thermochrome Deckschicht kann auch aus mehreren übereinander angeordneten Teilschichten bestehen. Die Teilschichten können beispielsweise als thermochrome Teilschichten mit unterschiedlichen Umschlagtemperaturen und/ oder unterschiedlichen Farben ausgebildet sein. Auf diese Weise kann bei Temperaturbeaufschlagung eine Kaskade unterschiedlicher.visueller Eindrücke erzeugt werden. Die Teilschichten können aber auch die gleiche Umschlagtemperatur und/oder gleiche Farben aufweisen.

Mit Bezug auf den Querschnitt durch die erfindungsgemäße Identifikationskarte 30 der Fig. 3 umfasst die thermochrome Deckschicht 16 in einer gegenwärtig besonders bevorzugten Gestaltung eine erste thermochrome Teilschicht 32 und eine zweite thermochrome Teilschicht 34, wobei die erste thermochrome Teilschicht 32 flächig und die zweite thermochrome Teilschicht 34 reliefartig ausgebildet ist. Die zweite thermochrome Teilschicht 34 kann dabei insbesondere mit Hilfe von Laminierblechen oder auch drucktechnisch reliefartig ausgebildet sein. Im Ausführungsbeispiel weisen beide thermochrome Teilschichten 32, 34 eine Umschlagtemperatur von 35 °C auf. Die beiden Teilschichten können, wie in Fig. 3 dargestellt, durch ein Folienelement 36 beabstandet sein, in anderen Gestaltungen können die beiden Teilschichten 32, 34 auch unmittelbar übereinander vorliegen. Die Ausführung als mindestens zwei Teilschichten, von denen mindestens eine Teilschicht mit einem Relief versehen ist, ergibt einen dreidimensionalen Effekt, mit dem sich das Relief von seiner Umgebung abhebt.

Über der reliefartig ausgebildeten Teilschicht 34 ist eine optisch variable Flüssigkristallschicht 18 angeordnet, die im Ausführungsbeispiel im Siebdruckverfahren in einer Dicke von 15 bis 20 µm auf die zweite Teilschicht 34 aufgebracht wurde. Diese Schichtung geht von einer Aufbringung beider Teilschichten 18 und 34 auf dem Folienelement 36 aus. Selbstverständlich muss bei einer Aufbringung der Teilschichten 18 und 34 auf dem Folienelement 38 die Schichtung umgekehrt werden.

Die verborgene Kennzeichnung 22 wurde auch bei dieser Ausgestaltung durch Einwirkung von Infrarot-Laserstrahlung durch die beiden infrarotdurchlässigen thermochromen Teilschichten 32, 34 und die infrarotdurchlässige Flüssigkristallschicht 18 hindurch in die Kennzeichnungsschicht 14 eingebracht.

Bei normaler Umgebungstemperatur, also unterhalb der Umschlagtemperatur der thermochromen Teilschichten 32, 34 sind diese undurchsichtig, so dass der visuelle Eindruck der Identifikationskarte 30 im Bereich der verborgenen Kennzeichnung durch das Relief der Teilschicht 34 in Zusammenwirkung mit der optisch variablen Flüssigkristallschicht 18 bestimmt wird. Oberhalb der Umschlagtemperatur, beispielsweise bei einer Temperatur von 40 °C, sind beide thermochrome Teilschichten 32, 34 transparent und geben den Blick auf die zuvor verborgene Kennzeichnung 22 frei.

In allen Gestaltungen ist die thermochrome Deckschicht 16 und die optionale weitere Schicht für Strahlung außerhalb des sichtbaren Spektralbereichs, insbesondere für Infrarotstrahlung durchlässig, während die Kennzeichnungsschicht 14 Strahlungsenergie außerhalb des sichtbaren Spektralbereichs, insbesondere Infrarotstrahlung, absorbiert. Die verborgene Kennzeichnung 22 kann so mittels Laserstrahlung einer Wellenlänge außerhalb des sichtbaren Spektralbereichs, beispielsweise einer Wellenlänge von 1,064 µm (Nd:YAG-Laser), durch die thermochrome Deckschicht 16 und die weitere Schicht 18 hindurch in die Kennzeichnungsschicht 14 eingeschrieben werden. Diese Individualisierung kan insbesondere erst nach der eigentlichen Herstellung des kartenförmigen Datenträgers durch den Kartenhersteller erfolgen, beispielsweise wenn personenbezogene Daten, die einen berechtigten Nutzer des Datenträgers identifizieren, nachträglich vor Ort in das Innere des Schichtaufbaus eingebracht werden sollen.

Die Kennzeichnungsschicht 14 ist für die Strahlung des verwendeten Laserschreibers sensibilisiert, so dass die Absorption von Strahlungsenergie zu einer visuell erkennbaren Veränderung, beispielsweise einer Verfärbung, Bleichung oder Schwärzung führt. Die Kennzeichnungsschicht 14 kann dazu etwa durch Rußpigmente, Infrarotabsorber auf Antimon/Zinn-Basis, oder auch durch Magnetpigmente, etwa auf Basis von Eisenoxiden, für Laserstrahlung im nahen Infrarot sensibilisiert werden.

## Patentansprüche

1. Mehrschichtiger kartenförmiger Datenträger mit
- einer Kennzeichnungsschicht, die eine verborgene Kennzeichnung enthält, und
- einer zumindest im Bereich der verborgenen Kennzeichnung über der Kennzeichnungsschicht angeordneten thermochromen Deckschicht, die unterhalb ihrer Umschlagtemperatur undurchsichtig ist und die Kennzeichnung verbirgt, und die oberhalb ihrer Umschlagtemperatur durchscheinend oder transparent ist und den Blick auf die Kennzeichnung freigibt, **dadurch gekennzeichnet, dass**
- die thermochrome Deckschicht für Strahlung außerhalb des sichtbaren Spektratbereichs durchlässig ist und die Kennzeichnungsschicht Strahlungsenergie außerhalb des sichtbaren Spektralbereichs absorbiert, so dass die verborgene Kennzeichnung mittels Laserstrahlung einer Wellenlänge außerhalb des sichtbaren Spektralbereichs durch die thermochrome Deckschicht hindurch in die Kennzeichnungsschicht einbringbar ist.

2. Datenträger nach Anspruch 1, **dadurch gekennzeichnet, dass** die thermochrome Deckschicht durch eine thermochrome Druckschicht gebildet ist.

3. Datenträger nach Anspruch 1, **dadurch gekennzeichnet, dass** die thermochrome Deckschicht durch ein thermochromes Folienelement gebildet ist.

4. Datenträger nach wenigstens einem der Ansprüche 1 bis 3, **dadurch gekennzeichnet, dass** die thermochrome Deckschicht eine Umschlagtemperatur im Bereich von 25 °C bis 60 °C, vorzugsweise im Bereich von 30 °C bis 40 °C aufweist.

5. Datenträger nach wenigstens einem der Ansprüche 1 bis 4, **dadurch gekennzeichnet, dass** über der thermochromen Deckschicht eine optisch variable Farbschicht, insbesondere auf Basis von Flüssigkristallpigmenten angeordnet ist.

6. Datenträger nach wenigstens einem der Ansprüche 1 bis 4, **dadurch gekennzeichnet, dass** über der thermochromen Deckschicht eine transparente Folie mit einer diffraktiven Beugungsstruktur, insbesondere einem Hologramm oder einer anderen hologrammähnlichen Beugungsstruktur angeordnet ist.

7. Datenträger nach wenigstens einem der Ansprüche 1 bis 6, **dadurch gekennzeichnet, dass** die thermochrome Deckschicht reliefartig ausgebildet ist.

8. Datenträger nach wenigstens einem der Ansprüche 1 bis 7, **dadurch gekennzeichnet, dass** die thermochrome Deckschicht zumindest eine erste und eine zweite übereinander angeordnete thermochrome Teilschicht enthält.

9. Datenträger nach Anspruch 8, **dadurch gekennzeichnet, dass** die erste thermochrome Teilschicht flächig und die zweite thermochrome Teilschicht reliefartig ausgebildet ist.

10. Datenträger nach Anspruch 8 oder 9, **dadurch gekennzeichnet, dass** die erste und zweite thermochrome Teilschicht unterhalb ihrer Umschlagtemperatur unterschiedliche Farben aufweisen.

11. Datenträger nach wenigstens einem der Ansprüche 8 bis 10, **dadurch gekennzeichnet, dass** die erste und zweite thermochrome Teilschicht unterschiedliche Umschlagtemperaturen aufweisen.

12. Datenträger nach wenigstens einem der Ansprüche 8 bis 11, **dadurch gekennzeichnet, dass** die erste und zweite thermochrome Teilschicht beabstandet angeordnet, insbesondere durch ein Folienelement getrennt sind.

13. Verfahren zum Einbringen einer verborgenen Kennzeichnung in einen kartenförmigen Datenträger, der eine Kennzeichnungsschicht aufweist, die Strahlungsenergie außerhalb des sichtbaren Spektralbereichs absorbiert, und über der in einem zu kennzeichnenden Bereich eine thermochrome Deckschicht angeordnet ist, die für Strahlung außerhalb des sichtbaren Spektralbereichs durchlässig ist, **dadurch gekennzeichnet, dass** die verborgene Kennzeichnung durch Einwirkung von Laserstrahlung einer Wellenlänge außerhalb des sichtbaren Spektralbereichs durch die thermochrome Deckschicht hindurch in die Kennzeichnungsschicht eingebracht wird.

14. Verfahren nach Anspruch 13 **dadurch gekennzeichnet, dass** zum Einbringen der Kennzeichnung Laserstrahlung im infraroten Spektralbereich, insbesondere einer Wellenlänge von etwa 1,06 µm verwendet wird.

## Claims

1. A multilayer card-shaped data carrier having
- a marking layer containing a hidden marking, and
- a thermochromic cover layer arranged over the marking layer at least in the region of the hidden marking, said thermochromic layer being opaque below its color change temperature and hiding the marking, and being translucent or transparent above its color change temperature and revealing the marking, **characterized in that**
- the thermochromic cover layer is transmissive to radiation outside the visible spectral range and the marking layer absorbs radiation energy outside the visible spectral range, so that the hidden marking can be incorporated in the marking layer through the thermochromic cover layer by means of laser radiation of a wavelength outside the visible spectral range.

2. The data carrier according to claim 1, **characterized in that** the thermochromic cover layer is formed by a thermochromic printed layer.

3. The data carrier according to claim 1, **characterized in that** the thermochromic cover layer is formed by a thermochromic foil element.

4. The data carrier according to at least one of the claims 1 to 3, **characterized in that** the thermochromic cover layer has a color change temperature in the range of 25°C to 60°C, preferably in the range of 30°C to 40°C.

5. The data carrier according to at least one of the claims 1 to 4, **characterized in that** over the thermochromic cover layer there is arranged an optically variable ink layer, in particular on the basis of liquid crystal pigments.

6. The data carrier according to at least one of the claims 1 to 4, **characterized in that** over the thermochromic cover layer there is arranged a transparent foil having a diffractive diffraction structure, in particular a hologram or a different, hologram-like diffraction structure.

7. The data carrier according to at least one of the claims 1 to 6, **characterized in that** the thermochromic cover layer is of reliefed configuration.

8. The data carrier according to at least one of the claims 1 to 7, **characterized in that** the thermochromic cover layer contains at least a first and a second thermochromic partial layer arranged over each other.

9. The data carrier according to claim 8, **characterized in that** the first thermochromic partial layer is of planar configuration and the second thermochromic partial layer is of reliefed configuration.

10. The data carrier according to claim 8 or 9, **characterized in that** the first and second thermochromic partial layer have different colors below their color change temperature.

11. The data carrier according to at least one of the claims 8 to 10, **characterized in that** the first and second thermochromic partial layer have different color change temperatures.

12. The data carrier according to at least one of the claims 8 to 11, **characterized in that** the first and second thermochromic partial layer are arranged spaced apart from each other, in particular separated by a foil element.

13. A method for incorporating a hidden marking in a card-shaped data carrier having a marking layer which absorbs radiation energy outside the visible spectral range, and over which, in a region to be marked, a thermochromic cover layer is arranged that is transmissive to radiation outside the visible spectral range, **characterized in that** the hidden marking is incorporated in the marking layer through the thermochromic cover layer by the action of laser radiation of a wavelength outside the visible spectral range.

14. The method according to claim 13, **characterized in that** for incorporating the marking, laser radiation in the infrared spectral range is employed, in particular of a wavelength of approximately 1.06 µm.

## Revendications

1. Support de données multicouche en forme de carte, comprenant
- une couche de marquage qui comporte un marquage caché, et
- une couche de recouvrement thermochromique qui, au moins dans la zone du marquage caché, est agencée au-dessus de la couche de marquage, et qui, en dessous de sa température de virage, est opaque et cache le marquage, et qui, au-dessus de sa température de virage, est translucide ou transparente et offre à la vue le marquage
**caractérisée en ce que**
- la couche de recouvrement thermochromique est perméable au rayonnement hors de la zone spectrale visible et **en ce que** la couche de marquage absorbe de l'énergie de rayonnement hors de la zone spectrale visible, de telle sorte que le marquage caché peut être inséré dans la couche de marquage à travers la couche de recouvrement thermochromique au moyen de rayonnement laser d'une longueur d'onde hors de la zone spectrale visible.

2. Support de données selon la revendication 1, **caractérisé en ce que** la couche de recouvrement thermochromique consiste en une couche d'impression thermochromique.

3. Support de données selon la revendication 1, **caractérisé en ce que** la couche de recouvrement thermochromique consiste en un élément en pellicule thermochromique.

4. Support de données selon au moins une des revendications de 1 à 3, **caractérisé en ce que** la couche de recouvrement thermochromique présente une température de virage comprise entre 25° C et 60° C, de préférence entre 30° C et 40° C.

5. Support de données selon au moins une des revendications de 1 à 4, **caractérisé en ce que**, par-dessus la couche de recouvrement thermochromique, une couche d'encre optiquement variable, notamment à base de pigments à cristaux liquides, est agencée.

6. Support de données selon au moins une des revendications de 1 à 4, **caractérisé en ce que**, par-dessus la couche de recouvrement thermochromique, un film transparent comportant une structure de diffraction, notamment un hologramme ou une autre structure de diffraction s'apparentant à un hologramme, est agencée.

7. Support de données selon au moins une des revendications de 1 à 6, **caractérisé en ce que** la couche de recouvrement thermochromique est réalisée en relief.

8. Support de données selon au moins une des revendications de 1 à 7, **caractérisé en ce que** la couche de recouvrement thermochromique comporte au moins une première et une deuxième couche thermochromique partielle agencées l'une sur l'autre.

9. Support de données selon la revendication 8, **caractérisé en ce que** la première couche thermochromique partielle est plane et **en ce que** la deuxième couche thermochromique partielle est réalisée en relief.

10. Support de données selon la revendication 8 ou 9, **caractérisé en ce que**, en dessous de leur température de virage, la première et la deuxième couche thermochromique partielle présentent différentes couleurs.

11. Support de données selon au moins une des revendications de 8 à 10, **caractérisé en ce que** la première et la deuxième couche thermochromique partielle présentent différentes températures de virage.

12. Support de données selon au moins une des revendications de 8 à 11, **caractérisé en ce que** la première et la deuxième couche thermochromique partielle sont agencées de manière espacée, notamment séparées par un élément en pellicule.

13. Procédé d'insertion d'un marquage caché dans un support de données en forme de carte qui comporte une couche de marquage qui absorbe de l'énergie de rayonnement hors de la zone spectrale visible, et au-dessus de laquelle, dans une zone à marquer, une couche de recouvrement thermochromique est agencée, qui est perméable au rayonnement hors de la zone spectrale visible, **caractérisé en ce que** le marquage caché est inséré dans la couche de marquage à travers la couche de recouvrement thermochromique par effet de rayonnement laser d'une longueur d'onde hors de la zone spectrale visible.

14. Procédé selon la revendication 13, **caractérisé en ce que**, pour l'insertion du marquage, un rayonnement laser de la zone spectrale infrarouge, notamment d'une longueur d'onde d'environ 1,06 µm, est utilisé.
